# EUROPEAN PATENT SPECIFICATION

(11) **EP 3 129 444 B1**
(45) Date of publication and mention of the grant of the patent: **08.04.2020**
(21) Application number: 14891637.2
(22) Date of filing: 16.05.2014
(51) Int. Cl.: C09K 8/524, E21B 37/06

(54) **TAGGED PARAFFIN INHIBITORS AND ASPHALTENE INHIBITORS FOR USE IN SUBTERRANEAN OPERATIONS**
MARKIERTE PARAFFINHEMMER UND ASPHALTENHEMMER FÜR UNTERIRDISCHE OPERATIONEN
INHIBITEURS DE DÉPÔT DE PARAFFINE ET INHIBITEURS DE DÉPÔT D'ASPHALTÈNES MARQUÉS DESTINÉS À ÊTRE UTILISÉS DANS DES OPÉRATIONS SOUTERRAINES

(43) Date of publication of application: 15.02.2017
(73) Proprietor: Multi-Chem Group, Llc, San Angelo TX 76904 (US)
(72) Inventor: QU, Liangwei, The Woodlands, TX 77382 (US); JIANG, Ying, Pearland, TX 77584 (US)
(74) Representative: Hoffmann Eitle
(86) International application number: PCT/US2014/038389
(87) International publication number: WO 2015/174996

(56) References cited:
- US-A- 6 051 535
- US-A1- 2004 039 125
- US-A1- 2007 062 698
- US-A1- 2007 267 193
- US-A1- 2009 277 643
- US-A1- 2011 027 803
- US-A1- 2012 048 808
- US-A1- 2013 186 629
- US-A1- 2013 186 629
- US-B2- 7 943 058

## Description

### BACKGROUND

The present disclosure relates to methods for providing paraffin or asphaltene inhibition in a subterranean formation.

Crude oil produced from subterranean formations typically contains many kinds of hydrocarbons, including paraffin wax. Paraffin wax is typically dissolved in crude oil at higher temperatures and/or pressures. However, paraffin wax tends to precipitate from crude oil in waxy solid deposits when the pressure and temperature are lowered as the hydrocarbon is produced and as the crude oil cools down. Paraffin wax deposition in well bores, tubing, and/or pipelines may obstruct the flow of oil and/or other fluids, lowering oil production and interfering with transportation.

Asphaltenes are also a problem in crude oil production in many areas around the world. Asphaltenes may precipitate as solids in the matrix of the formation, in a previously-created fracture in the formation, in the wellbore, or in production tubing. Asphaltenes that precipitate in the formation can result in plugging of the pores in the matrix subterranean formation.

Removal and/or inhibition of paraffin wax and asphaltene deposits is typically attempted using various mechanical, thermal, or chemical means (or some combination thereof). As used herein, the term "inhibit" and its derivatives refer to a lessening of the tendency of a phenomenon to occur and/or the degree to which that phenomenon occurs. The term "inhibit" does not imply any particular degree or amount of inhibition. The main mechanical approach for helping to clean a pipeline, including for removing paraffin buildup, is to run a mechanical device (*e*.*g*., a "pig" or paraffin scratcher or scraper) through the pipeline that scrapes the inner wall of the pipeline and pushes the paraffin through. The device is normally driven through the pipeline by a relatively high pumping pressure behind the device, which is used to force the pig through the pipeline. However, if paraffin buildup on the inner walls of the pipeline is heavy, as the device moves forward it will collect so much paraffin in front of the moving device that it blocks any further movement of the device, plugging the pipeline. Moreover, these techniques are typically unsuitable for use in a subterranean formation or well bore. In thermal techniques, heated oil and/or water also may be pumped through production tubulars to reduce paraffin deposition, but these methods also may not be suitable for subterranean tubulars. Certain pipelines where paraffin deposition occurs also may be heated. However, these techniques are often very costly, and may not be feasible for subsea pipelines that are in direct contact with the surrounding cold seawater.

Chemical paraffin and asphaltene treatment additives have also been injected into tubulars, pipelines, and/or subterranean formations to remove paraffin wax and/or to reduce or substantially prevent deposition of paraffin wax in pipelines and tubulars, all with varying levels of success. Such paraffin treatment additives include solvents, surfactants, dispersants, crystal modifiers, and the like. However, these paraffin inhibitors are not always effective, for example, if they are not placed in the desired locations and/or are not delivered to the desired locations at sufficiently high concentrations. In some cases, certain types of tracer materials such as radioactive materials, fluorescing materials, and iodine have been included in the same fluid as the paraffin or asphaltene inhibitor to monitor their location. However, the accuracy of these tracers is often uncertain, for example, since the tracers often have different solubilities from that of the paraffin or asphaltene inhibitor.

US 2011/0027803 relates to a composition comprising a treatment substance (e.g. a wax inhibitor) attached to a detectable label which is capable of interacting with a biomacromolecule to produce a detectable signal. The composition may be used in a well or pipeline.

US 2013/0186629 relates to a method of inhibiting asphaltene deposition in a hydrocarbon fluid, the method comprising adding to the fluid an asphaltene inhibitor which is the reaction product of an organic polymer and a co-reactant.

### BRIEF DESCRIPTION OF THE FIGURES

The drawings illustrate certain aspects of some of the embodiments of the present disclosure, and should not be used to limit or define the disclosure.

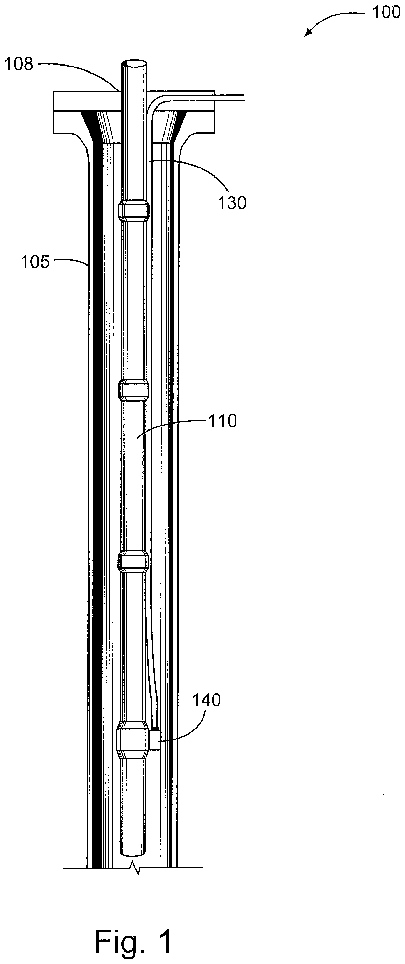

Figure 1 is a diagram illustrating an injection system that may be used in accordance with certain embodiments of the present disclosure.

While embodiments of this disclosure have been depicted and described and are defined by reference to example embodiments of the disclosure, such references do not imply a limitation on the disclosure, and no such limitation is to be inferred. The subject matter disclosed is capable of considerable modification, alteration, and equivalents in form and function, as will occur to those skilled in the pertinent art and having the benefit of this disclosure. The depicted and described embodiments of this disclosure are examples only, and not exhaustive of the scope of the disclosure.

### SUMMARY OF THE INVENTION

The present invention provides a method comprising the steps of providing a tagged inhibitor of paraffin or asphaltene precipitation that comprises a base compound bonded to a detectable moiety, the base compound being capable of inhibiting precipitation of paraffins or asphaltenes; and introducing the tagged inhibitor into at least a portion of a subterranean formation (100); characterised in that the base compound is a maleic anhydride copolymer and the detectable moiety comprises phosphorus, and the method further comprises the step of using inductively coupled plasma optical emission spectrometry to determine a concentration of the tagged inhibitor in a sample of fluid from at least a portion of the subterranean formation.

### DETAILED DESCRIPTION

Illustrative embodiments of the present disclosure are described in detail herein. In the interest of clarity, not all features of an actual implementation may be described in this specification. It will of course be appreciated that in the development of any such actual embodiment, numerous implementation-specific decisions may be made to achieve the specific implementation goals, which may vary from one implementation to another. Moreover, it will be appreciated that such a development effort might be complex and time-consuming, but would nevertheless be a routine undertaking for those of ordinary skill in the art having the benefit of the present disclosure.

The present disclosure relates to methods for providing paraffin or asphaltene inhibition in a subterranean formation. Specifically, the methods of the present disclosure involve the synthesis and use of paraffin and/or asphaltene inhibiting additives that are tagged with one or more detectable moieties (*i*.*e*., a detectable element or functional group) so that they may be traced for residual concentrations using various analytical methods when placed in those locations. The tagged inhibitors of the present disclosure comprise a base compound that is capable of inhibiting and/or preventing the precipitation of paraffins and/or asphaltenes bonded with a detectable element or functional group. In the methods of the present disclosure, a tagged inhibitor of the present disclosure is placed in a subterranean formation where paraffin and/or asphaltene inhibition is desired. The residual amount and/or concentration of the tagged inhibitor in a specific location then may be determined by analyzing fluid samples from that location (*e*.*g*., a well bore) and determining the concentration of the detectable element or functional group.

The methods of the present disclosure may, among other benefits, provide a monitoring tool for establishing effective treatment rates for paraffin and/or asphaltene inhibitors where conventional monitoring methods cannot be used, and may do so more accurately, reliably, and efficiently even where such conventional methods are available. In certain embodiments, the enhanced monitoring techniques enabled by the methods of the present disclosure may lead to decreased failure rates due to inadequate treatment, and/or may reduce cost incurred by overtreatment to avoid failures. The methods of the present disclosure also may reduce operator cost by eliminating the need for time-consuming monitoring methods and lost time and resources due to inaccurate monitoring. The methods of the present disclosure also may decrease the uncertainty of inhibitor transport in certain applications involving pipelines, liquid-producing wells, annulus drip applications, capillary strings, umbilical lines, batch treatments, gas lift applications, and the like.

The base paraffin and/or asphaltene inhibiting compound used in the methods of the present disclosure is a maleic anhydride copolymer. The base compound may be provided as a reagent, or may be generated in the synthesis process.

The detectable moiety comprises phosphorus. In certain embodiments, the detectable element may be provided as a component of another compound or reagent to be reacted with the base compound or its precursors.

The tagged inhibitors of the present disclosure may be synthesized by any means known in the art. An example of a synthesis scheme that may be used to synthesize tagged inhibitors of the present disclosure is illustrated in Scheme 1 below.

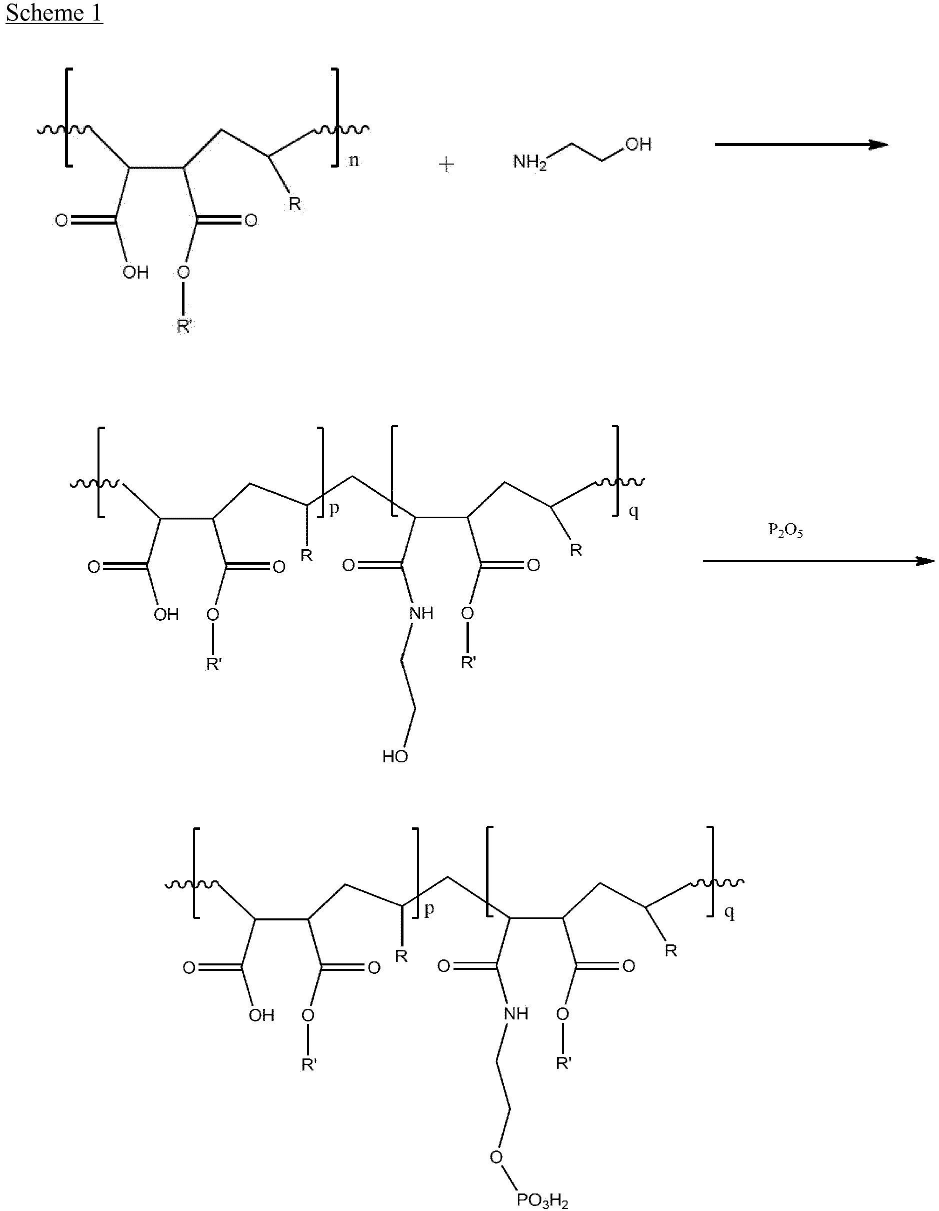

Scheme 1 reacts an alpha-olefin / maleic anhydride copolymer with phosphorus pentoxide to yield an alpha-olefm / maleic anhydride copolymer tagged with a phosphorus ester.

The ratios of the various reagents in the synthesis schemes shown above (*e*.*g*., monomers to be copolymerized) may be varied to produce tagged inhibitors having different structures and/or to produce a higher or lower yield of tagged inhibitor. A person of skill in the art, with the benefit of this disclosure, will recognize how to vary those amounts to produce the desired tagged compounds and structures.

The molar concentration or amount of a tagged inhibitor used in the methods and compositions of the present disclosure may be similar to those used in conventional uses of the un-tagged base compounds as paraffin and/or asphaltene inhibitors, although the amount or concentration of the inhibitor by mass, once tagged with the detectable element or functional group, may be higher than the amounts of un-tagged base compound used conventionally. In certain embodiments, the tagged inhibitors of the present disclosure may be introduced into a solution or fluid (*e*.*g*., a fluid in a pipeline) in a concentration of from about 50 parts per million ("ppm") to about 2000 ppm. In certain embodiments, a tagged inhibitor of the present disclosure may be used in combination with one or more additional paraffin and/or asphaltene inhibitors, including but not limited to inhibitors that are not tagged with a detectable element or functional group.

The inhibitors of the present disclosure may be introduced in a subterranean formation in conjunction with one or more treatment fluids. Such treatment fluids may comprise any treatment fluid known in the art (*e*.*g*., treatment fluids suitable for use in subterranean formations). As used herein, the term "treatment fluid" refers to any fluid that may be used in an application in conjunction with a desired function and/or for a desired purpose. The term "treatment" does not imply any particular action by the fluid or any component thereof. The treatment fluids of the present invention generally comprise a base fluid and, in certain embodiments, comprise one or more acids. Examples of common treatment fluids include, but are not limited to, drilling fluids, spacer fluids, completion fluids, and work-over fluids. Treatment fluids of the present disclosure optionally may comprise any number of additional additives in combination with the catechol component and amine component. Other examples of such additional additives include, but are not limited to, weighting agents, surfactants, emulsifiers, acids, fluorides, fluid loss control additives, gas, nitrogen, carbon dioxide, surface modifying agents, tackifying agents, foamers, corrosion inhibitors, scale inhibitors, catalysts, clay control agents, biocides, friction reducers, antifoam agents, bridging agents, dispersants, flocculants, additional H₂S scavengers, CO₂ scavengers, oxygen scavengers, lubricants, viscosifiers, breakers, relative permeability modifiers, resins, particulate materials (*e*.*g*., proppant particulates), wetting agents, coating enhancement agents, filter cake removal agents, and the like. A person skilled in the art, with the benefit of this disclosure, will recognize the types of additives that may be included in the fluids of the present disclosure for a particular application.

The methods of the present disclosure may be used during or in conjunction with any subterranean operation. Suitable subterranean operations may include, but are not limited to, preflush treatments, afterflush treatments, drilling operations, hydraulic fracturing treatments, sand control treatments (e.g., gravel packing), acidizing treatments (e.g., matrix acidizing or fracture acidizing), "frac-pack" treatments, well bore clean-out treatments, and other operations where a treatment fluid or inhibitor of the present disclosure may be useful. In certain embodiments, the methods and/or compositions of the present disclosure may be used in near well bore clean-out operations, wherein a treatment fluid of the present disclosure may be circulated in the subterranean formation, thereby suspending or solubilizing particulates residing in the formation. The treatment fluid then may be recovered out of the formation, carrying the suspended or solubilized particulates with it. In certain embodiments, a tagged inhibitor of the present disclosure may be pumped into a portion of a subterranean formation (*e*.*g*., a fracture) where the fluid may leak off into the formation faces near the well bore, forming a reservoir of inhibitor near the well bore. When fluids (*e*.*g*., hydrocarbons) are produced back out of the well bore, the inhibitor may slowly feed into the oil being produced. In certain embodiments, the methods of the present disclosure may be used in conjunction with umbilical equipment that may be used, among other purposes, to transport various fluids (*e*.*g*., treatment fluids and/or fluids produced from subterranean formations).

The inhibitors of the present disclosure may be introduced into a subterranean formation using any method or equipment known in the art. Introduction of the inhibitors of the present disclosure may in such embodiments include delivery via any of a tube, umbilical, pump, gravity, and combinations thereof. For example, these inhibitors may be applied to a subterranean formation using batch treatments, squeeze treatments, continuous treatments, and/or combinations thereof. In certain embodiments, a batch treatment may be performed in a subterranean formation by stopping production from the well and pumping a specific amount or quantity of the tagged inhibitor into a well bore, which may be performed at one or more points in time during the life of a well. In other embodiments, a squeeze treatment may be performed by dissolving the tagged inhibitor in a suitable solvent at a suitable concentration and squeezing that solvent carrying the inhibitor downhole into the formation, allowing production out of the formation to bring the tagged inhibitor to its desired location. In still other embodiments, a tagged inhibitor of the present disclosure may be injected into a portion of a subterranean formation using an annular space or capillary injection system to continuously introduce the inhibitor into the formation. Other means and/or equipment that may be used to continuously inject a tagged inhibitor of the present disclosure into a well bore include, but are not limited to slip-stream systems, annulus drip systems, cap strings, umbilical strings, gas lift systems, continuous metering systems, subsurface hydraulic systems, bypass feeders, and the like. In certain embodiments, such continuous injection equipment at a well site may be controlled from a remote location and/or may be partially or completely automated. In certain embodiments, a treatment fluid comprising a tagged inhibitor of the present disclosure may be circulated in the well bore using the same types of pumping systems and equipment at the surface that are used to introduce treatment fluids or additives into a well bore penetrating at least a portion of the subterranean formation. In certain embodiments, an inhibitor of the present disclosure could be dried and formed into a solid for delivery into rat holes, tanks, and/or a wellbore.

For example, a tagged inhibitor of the present disclosure may be introduced into a well bore using a capillary injection system as shown in Figure 1. Referring now to Figure 1, well bore 105 has been drilled to penetrate a portion of a subterranean formation 100. A tubing 110 (*e*.*g*., production tubing) has been placed in the well bore 105. A capillary injection tube 130 is disposed in the annular space between the outer surface of tubing 110 and the inner wall of well bore 105. The capillary injection tube 130 is connected to a side-pocket mandrel 140 at a lower section of the tubing 110. A tagged inhibitor may be injected into capillary injection tube 130 at the wellhead 108 at the surface (*e*.*g*., using one or more pumps (not shown)) such that it mixes with production fluid at or near the side-pocket mandrel 140. The system shown in Figure 1 also may include one or more valves (not shown) at one or more locations along the capillary injection tube 130, among other reasons, to prevent flowback of fluid or gas to the surface through the tube. As the production fluid flows through the tubing 110, the tagged inhibitor may inhibit the deposition of paraffin wax and/or asphaltenes on the inner surfaces of tubing 110. Other capillary injection systems and side pocket mandrel devices (*e*.*g*., those used in gas lift production) may be used in a similar manner to the system shown in Figure 1.

Once introduced into a subterranean formation, the tagged inhibitors of the present disclosure are detected or traced in fluid samples taken from any location where the tagged inhibitor is believed to be. For example, where the tagged inhibitor is introduced into a subterranean formation, fluid samples may be taken at the surface (*e*.*g*., at a well head) and/or one or more downhole locations. Where tagged inhibitor is introduced into a pipeline, fluid samples may be taken at one or more locations along the pipeline. The fluid samples are analyzed using inductively coupled plasma optical emission spectrometry (ICP-OES).

The data generated in this analysis is used determine the concentration of the tagged inhibitor. That data may be used to determine, among other things, whether an obstruction may be preventing fluid and inhibitor from flowing to the sampled location, and/or whether additional inhibitors should be added (*e*.*g*., if the concentration of the tagged inhibitor is less than a predetermined effective amount necessary to sufficiently inhibit paraffin and/or asphaltene precipitation). Where a tagged inhibitor of the present disclosure is applied in a batch treatment, the data generated in this analysis may be used to determine a residual concentration of the inhibitor after a certain period of time has passed since the last batch treatment. In certain embodiments, this data also may be used to infer the presence and/or location of additional additives (*e*.*g*., paraffin and/or asphaltene inhibitors) that are not tagged with a detectable element or functional group that were mixed and/or injected with a tagged inhibitor of the present disclosure. In certain embodiments, an operator or technician may use some or all of this data to assess whether the inhibitors are being applied in a particular operation in sufficient concentrations and/or sufficiently frequently (*e*.*g*., where batch treatments are used) to provide the desired level of paraffin and/or asphaltene inhibition. Based at least in part on this data, an operator or user may select or adjust the concentration of an inhibitor to use, for example, in an ongoing continuous treatment and/or in a subsequent batch treatment. Based at least in part on this data, an operator or user also may select and/or adjust the frequency and/or timing for a subsequent batch treatment of an inhibitor. In certain embodiments, such subsequent treatments may use a tagged inhibitor of the present disclosure and/or any other paraffin or asphaltene inhibitor known in the art.

In certain embodiments, the data generated in this analysis may be stored electronically and/or loaded into a database (*e*.*g*., an online database accessible from remote locations) for access by operators and/or technicians who may use that data to assess various conditions and treatment plans. One example of such a database where this data may be loaded and accessed is the MVP 2.0™ database available from Multi-Chem, a division of Halliburton Energy Services.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Furthermore, no limitations are intended to the details of construction or design herein shown, other than as described in the claims below. While compositions and methods are described in terms of "comprising", "containing" or "including" various components or steps, the compositions and methods can also "consist essentially of' or "consist of' the various components and steps. If there is any conflict in the usages of a word or term in this specification and one or more patent or other documents referenced herein, the definitions that are consistent with this specification should be adopted.

## Claims

1. A method comprising the steps of
providing a tagged inhibitor of paraffin or asphaltene precipitation that comprises a base compound bonded to a detectable moiety, the base compound being capable of inhibiting precipitation of paraffins or asphaltenes; and
introducing the tagged inhibitor into at least a portion of a subterranean formation (100);
**characterised in that**
the base compound is a maleic anhydride copolymer and the detectable moiety comprises phosphorus, and
the method further comprises the step of using inductively coupled plasma optical emission spectrometry to determine a concentration of the tagged inhibitor in a sample of fluid from at least a portion of the subterranean formation.

2. The method of claim 1, wherein
the concentration of the tagged inhibitor in the fluid sample is less than a predetermined effective amount, and
the method further comprises introducing an additional paraffin or asphaltene inhibitor into at least a portion of the subterranean formation.

3. The method of claim 1, wherein introducing the tagged inhibitor into at least a portion of the subterranean formation comprises injecting the tagged inhibitor into a capillary injection tube (130) disposed in a well bore (105) that penetrates at least a portion of the subterranean formation (100).

## Patentansprüche

1. Verfahren, das die folgenden Schritte umfasst:
Bereitstellen eines markierten Hemmers von Paraffin- oder Asphaltenfällungen, der eine Basenverbindung umfasst, die an eine nachweisbare Einheit gebunden ist, wobei die Basenverbindung dazu in der Lage ist, die Fällung von Paraffinen oder Asphalten zu hemmen; und
Einbringen des markierten Hemmers in mindestens einen Abschnitt einer unterirdischen Formation (100);
**dadurch gekennzeichnet, dass**
die Basenverbindung ein Maleinsäureanhydrid-Copolymer ist und die nachweisbare Einheit Phosphor umfasst, und
das Verfahren ferner den Schritt zum Verwenden von optischer Emissionsspektrometrie mit induktiv gekoppeltem Plasma umfasst, um eine Konzentration des markierten Hemmers in einer Fluidprobe von mindestens einem Abschnitt der unterirdischen Formation zu bestimmen.

2. Verfahren nach Anspruch 1, wobei
die Konzentration des markierten Hemmers in der Fluidprobe geringer als eine vordefinierte wirksame Menge ist; und
das Verfahren ferner das Einbringen eines zusätzlichen Paraffin- oder Asphaltenhemmers in mindestens einen Abschnitt der unterirdischen Formation umfasst.

3. Verfahren nach Anspruch 1, wobei das Einbringen des markierten Hemmers in mindestens einen Abschnitt der unterirdischen Formation das Einspritzen des markierten Hemmers in ein Rohr (130) für Kapillareinspritzung umfasst, das in einem Bohrloch (105) angeordnet ist, das mindestens einen Abschnitt der unterirdischen Formation (100) durchdringt.

## Revendications

1. Procédé comprenant les étapes :
de fourniture d'un inhibiteur marqué de précipitation de paraffine et d'asphaltène qui comprend un composé de base lié à une fraction détectable, le composé de base étant capable d'inhiber la précipitation de paraffines ou d'asphaltènes ; et
d'introduction de l'inhibiteur marqué dans au moins une partie d'une formation souterraine (100) ;
**caractérisé en ce que**
le composé de base est un copolymère anhydride maléique et la fraction détectable comprend du phosphore, et
le procédé comprend en outre l'étape d'utilisation d'une spectrométrie d'émission optique à plasma à couplage inductif pour déterminer une concentration de l'inhibiteur marqué dans un échantillon de fluide d'au moins une partie de la formation souterraine.

2. Procédé selon la revendication 1, dans lequel
la concentration de l'inhibiteur marqué dans l'échantillon de fluide est inférieure à une quantité efficace prédéterminée, et
le procédé comprend en outre l'introduction d'un inhibiteur de dépôt de paraffine ou d'asphaltène supplémentaire dans au moins une partie de la formation souterraine.

3. Procédé selon la revendication 1, dans lequel l'introduction de l'inhibiteur marqué dans au moins une partie de la formation souterraine comprend l'injection de l'inhibiteur marqué dans un tube d'injection capillaire (130) disposé dans un puits de forage (105) qui pénètre dans au moins une partie de la formation souterraine (100).
